(19) Europäisches Patentamt
European Patent Office
Office européen des brevets

(11) Publication number: 0 075 957
B1

(12) # EUROPEAN PATENT SPECIFICATION

(45) Date of publication of patent specification: 22.01.86

(51) Int. Cl.$^4$: C 08 F 220/28

(21) Application number: 82109027.1

(22) Date of filing: 29.09.82

(54) **Curable molding compositions containing a poly(acrylate).**

(30) Priority: 30.09.81 US 307212

(43) Date of publication of application:
06.04.83 Bulletin 83/14

(45) Publication of the grant of the patent:
22.01.86 Bulletin 86/04

(84) Designated Contracting States:
AT BE CH DE FR GB IT LI LU NL SE

(56) References cited:
none

(73) Proprietor: UNION CARBIDE CORPORATION
39 Old Ridgebury Road
Danbury Connecticut 06817 (US)

(72) Inventor: Michno, Michael John, Jr.
12 Thru-way Drive
Bridgewater New Jersey 08876 (US)

(74) Representative: Barz, Peter, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz
Siegfriedstrasse 8
D-8000 München 40 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 075 957 B1

Courier Press, Leamington Spa, England.

**Description**

This invention is directed to a curable molding composition containing (a) a poly(acrylate), (b) an ethylenically unsaturated monomer which is soluble in and copolymerizable with (a) and which is different from (a), (c) a silane and/or siloxane, and optionally, (d) acrylic or methacrylic acid or a functionalized derivative thereof which is different from (a) and (b). The combination of components in the composition of this invention have been found to produce reinforced articles having a particularly good balance of mechanical properties.

French Patent No. 1,567,710 describes the manufacture of the diacrylate of dipropoxylated bisphenol-F which is thereafter diluted with styrene in a ratio of about 30 parts by weight of styrene to about 70 parts by weight of the bis(acrylate). This material is reacted in the presence of benzoyl peroxide to affect a cured product in about 14 minutes and 30 seconds. The same resin is also catalyzed with 1 percent benzoyl peroxide as a 50 percent solution in tricresylphosphate and 0.15 percent diethylaniline. The resulting resin is used to make a fiberglass reinforced plastic laminate containing 12 layers of fiber resulting in a laminated sheet about 3 millimeters thick. The sheet sets in about 1 hour and then is heated at 115°C for 24 hours. Methyl methacrylate was also used to produce the bis(methacrylate) product which was also combined with styrene and evaluated for its SPI gel test time. Further experiments were carried out in the patent making the dimethacrylate of ethylene glycol which was polymerized with benzoyl peroxide.

EP—A—18.638 titled "A Poly(Acrylate) Containing Composition And Process For Producing Molded Articles", describes compositions containing a particular poly(acrylate), an ethylenically unsaturated monomer which is soluble in and copolymerizable with the poly(acrylate), and an elevated temperature free-radical curing catalyst capable of effecting the co-reaction of the poly(acrylate) and ethylenically unsaturated monomer.

The Examples of said EP—A—18.638 describe that resins prepared from poly(acrylates), such as ethoxylated bisphenol-A dimethacrylate, tetraethylene glycol dimethacrylate, triethylene glycol dimethacrylate and diethylene glycol dimethacrylate, and styrene, produce composites which have a good balance of mechanical properties. These composites contain up to 58 weight percent of glass.

It has now been found that when a silane and/or siloxane is added to a poly(acrylate) resin composition containing a poly(acrylate), an ethylenically unsaturated monomer, and optionally, acrylic or methacrylic acid or a functionalized derivative thereof, the resulting resin compositions produce reinforced articles having substantially improved mechanical properties over those resin compositions which do not contain the silane.

This combination of outstanding mechanical properties of reinforced articles make these resins especially suitable for the rapid production of glass-reinforced articles.

The improved curable molding composition of this invention comprises a mixture of:

(a) a poly(acrylate) characterized by the following empirical formula:

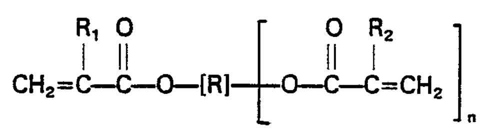

wherein R is the hydroxyl-free residue of an organic polyhydric alcohol which contained alcoholic hydroxyl groups bonded to different carbon atoms, $R_1$ and $R_2$ are independently hydrogen or methyl, and n is 1 to 3;

(b) an ethylenically unsaturated monomer which is soluble in and copolymerizable with (a) and which is different from (a).

(c) a silane and/or siloxane, and optionally

(d) acrylic or methacrylic acid or a functionalized derivative thereof which is different from (a) and (b).

The instant resin compositions have low viscosities, i.e., less than about 50 centipoise, preferably less than about 25 centipoise, so that they can be used to produce thermoset resin articles containing up to about 80 or higher weight percent of reinforcing fibers.

The poly(acrylate) is characterized by the following empirical formula:

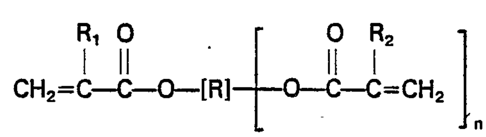

wherein R is the residue of an organic polyhydric alcohol which contained alcoholic hydroxyl groups bonded to different carbon atoms, $R_1$ and $R_2$ are independently hydrogen or methyl, and n is 1 to 3.

The polyhydric alcohol suitable for preparing the poly(acrylate) typically contains at least two carbon atoms and may contain from 2 to 4, inclusive, hydroxyl groups. These polyhydric alcohols include alkane diols, triols, tetraols, aliphatic ether containing diols, triols, tetraols, cycloaliphatic containing diols, triols, and tetraols, and aromatic containing diols, triols, and tetraols, and the like. Specific illustrations of organic polyols suitable in the practice of this invention include the following: ethylene glycol, diethylene glycol,

2,24 - trimethyl - 1,3 - pentanediol, dipropylene glycol, propylene glycol, polypropylene glycol having an average molecular weight of about 150 to about 600, triethylene glycol, 1 - 4 - cyclohexanedimethanol, neopentyl glycol, 2,2 - dimethyl - 3 - hydroxypropyl 2,2 - dimethyl - 3 - hydroxyproponate, polyethylene glycol having an average molecular weight of about 150 to about 600, 2,2 - bis[4 - (2 - hydroxyethoxy) - phenyl]propane, 2,2 - bis[4 - (2 - hydroxypropoxy)phenyl] - propane, triethanolamine, 2,3 - butanediol, tetraethylene glycol, 2,2 - bis(4 - hydroxyphenyl)propane, glycerine, trimethylolpropane, 1,4 - butanediol, the polycaprolactone ester of trimethylol-propane which contains about 1.5 equivalents of caprolactone, the polycaprolactone ester of trimethylolpropane which contains about 3.6 equivalents of caprolactone, 2 - ethyl - 1,3 - hexanediol, 1,5 - pentanediol, tri-propylene glycol, 2,2 - bis - (4 - hydroxylcyclohexyl)propane, 1,2,6 - hexanetriol, 1,3 - propanediol, 1,6-hexanediol and the like. Mixtures of the aforementioned polyols may be used in this invention.

The poly(acrylate) of the aforementioned organic polyhydric alcohol can be prepared by the reaction of acrylic acid or methacrylic acid or their simple esters with the polyhydric alcohol under conditions well known in the art. Poly(acrylates) produced by the addition of acrylic or methacrylic acid across ethylenically unsaturated bonds, such as in dicyclopentadiene diacrylate or dimethacrylate may also be used in the practice of this invention.

The preferred poly(acrylates) include ethoxylated bisphenol A dimethacrylate, tetraethylene glycol dimethacrylate, diethylene glycol dimethacrylate, ethoxylated bisphenol A diacrylate, tetraethylene glycol diacrylate, diethylene glycol diacrylate, trimethylolpropane triacrylate, and trimethylolpropane trimethacrylate.

Component (b) of this invention is an ethylenically unsaturated monomer which is soluble in and copolymerizable with (a) and which is different from (a).

These ethylenically unsaturated monomers contain at least a single

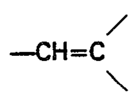

group, and preferably a

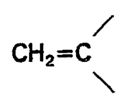

group and include styrene and its derivatives and homologues, divinylbenzene, diallylphthalate, non-functionalized esters of acrylic or methacrylic acid (such as ethyl acrylate, butyl acrylate, and methyl methacrylate), unsaturated nitriles (such as acrylonitrile and methacrylonitrile), and the like. Also the monomers include vinyl esters, e.g., vinyl acetate, vinyl propionate, and the like. Mixtures of the aforementioned monomers may be effectively employed in the practice of this invention.

The most preferred ethylenically unsaturated monomer contemplated in the practice of this invention is styrene.

Component (c), the silane and/or siloxane, which may be used herein include alkoxy silanes, i.e., lower alkyl-alkenyl and alkynyl alkoxy silanes. The silanes are generally of the formula:

$$R_3R_4SiY_2$$

wherein $R_3$ may be a monovalent aliphatically unsaturated hydrocarbon radical or hydrocarbonoxy radical. Examples of such radical are vinyl, allyl, butenyl, cyclohexenyl, cyclopentadienyl, cyclohexadienyl, $CH_2{=}C(CH_3)COO(CH_2)_3$—, and $CH_2{=}C(CH_3)COOCH_2CH_2O(CH_2)_3$—. Y may be any hydrolyzable group, for example, an alkoxy radical such as methoxy, ethoxy, and butoxy radicals, and acyloxy radical, for example, the formyloxy, acetoxy or propionoxy radicals, oximo radicals, e.g., $—ON{=}C(CH_3)_2$, $—ON{=}CHCH_2C_2H_5$ and $—ON{=}C(C_6H_5)_2$ or substituted amino radicals, e.g., alkylamino and arylamino radicals examples of which are $—NHCH_3$, $—NHC_2H_5$ and $—N(C_6H_5)_2$. $R_4$ may represent an $R_3$ group or a Y group. Preferred silanes include the following: gamma-methacryloxypropyltrimethoxysilane.

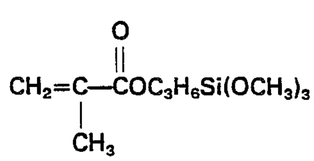

gamma-aminopropyltriethoxysilane

$$NH_2(CH_2)_3Si(OC_2H_5)_3$$

tris(methylcellosolve)gamma-methacrylpropylsilane

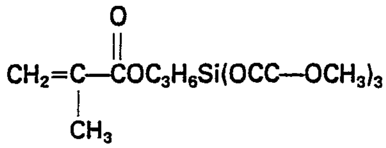

vinyltriethoxysilane:

$$CH_2{=}CHSi(OCH_2CH_3)_3$$

vinyltris(2-methoxyethoxy)silane:

$$CH_2{=}CHSi(OC_2H_4OCH_3)_3$$

Allyl PEG-350 adduct of dimethyl silicone

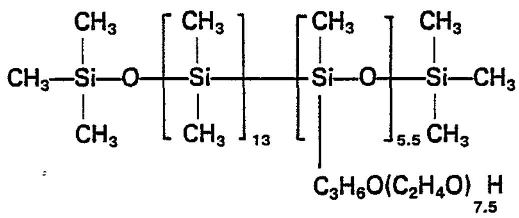

carbowax silane

$$CH_3O{-}[{-}C_2H_4O{-}]_{7.5}{-}C_3H_6Si(OCH_3)_3$$

Optional component (d) in the composition of this invention is acrylic or methacrylic acid or a functionalized derivative thereof which is different from (a) and (b). Mixtures of these may also be used. The functionalized derivatives are characterized by the presence of acrylate, methacrylate, acrylamide, and methacrylamide groups and also by the presence of functional groups such as hydroxyl, amino, alkylamino, ether and epoxide, for example. Preferred monomers are characterized by the following formula:

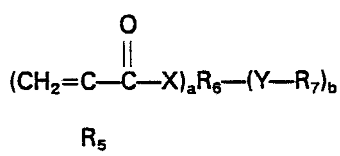

(II)

wherein $R_5$ is independently hydrogen or methyl; X and Y are independently —O— or

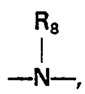

wherein $R_8$ is hydrogen or lower ($C_{1-6}$) alkyl; $R_6$ is an aliphatic or aromatic radical containing from 2 to about 10 carbon atoms, optionally containing —O— or

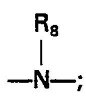

$R_7$ is hydrogen or an aliphatic or aromatic radical containing from 1 to 10 carbon atoms; and a and b are integers of or greater than 1, preferably 1 to 3.

These functionalized derivatives of acrylic or methacrylic acid include 2-hydroxyethyl acrylate, 2-hydroxyethyl methacrylate, hydroxypropyl acrylate, hydroxypropyl methacrylate, hydroxybutyl acrylate, hydroxybutyl methacrylate 2-aminoethyl acrylate, 2-aminoethyl methacrylate, 2-methylaminoethyl acrylate, 2-methylaminoethyl methacrylate, 2-dimethylaminoethyl acrylate, 2-dimethylaminoethyl

methacrylate, 2-hydroxyethyl acrylamide, 2-hydroxyethyl methacrylamide, 2-aminoethyl acrylamide, 2-aminoethyl methylacrylamide, diethylene glycol monoacrylate, diethylene glycol monomethacrylate, 2-methoxyethyl acrylate, 2-methoxyethyl methacrylate, pentaerythritol monoacrylate, pentaerythritol monomethacrylate, pentaerythritol diacrylate, pentaerythritol dimethacrylate, pentaerythritol triacrylate, glycerol monoacrylate, glycerol monomethacrylate, trimethylolpropane monoacrylate, trimethylolpropane monomethacrylate, glycidyl methacrylate, glycidyl acrylate, hydroxymethyl acrylamide and the like, or mixtures thereof. It is understood that several isomers of many of these monomers exist and would be suitable for use herein either as individual components or as mixtures with any of the other monomers. Similarly, it is understood that additional derivatives containing aromatic rings and other alkyl groups in the acid or ester portions of Formula II may also be included.

In the composition of this invention component (a) is present in amounts of from about 10 to about 75, preferably from about 35 to about 50 weight percent; component (b) is present in amounts of from about 10 to about 75, preferably from about 35 to about 50 weight percent; and component (c) is present in amounts of from about 0.5 to about 5.0, preferably from about 0.5 to about 2.0 parts per 100 parts of resin and component (d) when used, is present in amounts of from about 1.0 to about 25, preferably from about 1.0 to about 15 weight percent.

A free-radical curing catalyst which initiates curing via the co-reaction of the poly(acrylate), and the ethylenically unsaturated monomer is included in this invention. These curing catalysts include azo compounds, peroxides, peresters, perketals, and the like.

Azo and peroxide curing agents are described by, for example, Gallagher, et al. "Organic Peroxides Review", Plastics Design & Processing, July, 1978, pages 38—42, and August, 1978, pages 60—67, inclusive. The technology disclosed in those two articles is incorporated herein by reference. The choice of the specific peroxide or azo initiators for the purpose of curing the composition of this invention is within the purview of those having skill in this art and the manner in which such peroxides and azo initiators effect a desirable cure is generally characterized in the aforementioned articles.

Examples of such curing catalysts include 1,1 - di - t - butylperoxycyclohexane, 2,2 - di - t - butylperoxybutane, 2,2 - di - t - butylperoxy - 4 - methylpentane, 2,2 - dicumyl - peroxypropane, butyl - 2,2 - di - t - butylperoxyvalerate, 1,1 - bis(2,2,4 - trimethylpentyl - 2 - peroxy)cyclohexane, 2,2' - azo - bis - isobutyronitrile, dibenzoyl peroxide, lauroyl peroxide, di - t - butyl peroxide, diisopropyl peroxide carbonate, t - butylperoxy - 2 - ethylhexanoate, t - butylperpivalate, 2,5 - dimethylhexane - 2,5 - di - per - ethylhexanoate, t - butyl peroctoate, t - butyl perneodecanoate, t - butyl perbenzoate, t - butyl percrotonate, t - butyl perisobutyrate, di - t - butyl perphthalate, 1,1 - bis(t - butylperoxy) - 3,3,5 - trimethylcyclohexane, bis(4 - t - butylcyclohexyl)peroxydicarbonate, methyl ethyl ketone peroxide, 2,4-pentanedione peroxide, bis(t - butylperoxy) diisopropylbenzene, 2,4,4 - trimethylpentyl - 2 - peroxycyclohexane carboxylate, 2 - t - butylazo - 2 - cyano - 4 - methylpentane, ethyl 3,3 - di(t - butylperoxy)butyrate, and the like. These are commercially available materials.

The peresters and perketals may be used in combination with an acid cure accelerator as described in Netherlands Published Patent Application No. 7604405. These acids include Bronsted acids with a $pK_a$ value lower than or equal to that of formic acid, such as hydrochloric acid, sulfuric acid, nitric acid, phosphoric acid, trichloroacetic acid, p-toluenesulfonic acid, and the like. Also Lewis acids or metal halides with Lewis acid properties, such as boron trifluoride and the chlorides of iron, cobalt, zinc and aluminum, may be used.

Additionally, the above described curing catalysts may be used in combination with other cure accelerators such as cobalt compounds. These cobalt compounds include cobalt naphthenate, cobalt-amine cure promoters (such as those designated as PEP 183-S and available from Air Products Incorporated), and the like. These cure accelerators operate by decomposing the curing catalysts at a temperature below their normal activation or decomposition temperature.

Mixtures of the curing catalysts may be used herein, such as mixtures of peresters and/or ketals, of perketals and azo compounds, or of peresters and azo compounds.

The concentration of the curing agent can be varied within wide limits. As a representative range, the concentration can vary from about 0.25 to about 3.0 weight percent, preferably from about 0.5 to about 2.5 weight percent, and most preferably, from about 0.75 to about 2.0 weight percent, based on the weight of components (a), (b) and (c).

The compositions of this invention are prepared by solution blending the poly(acrylate), the ethylenically unsaturated monomer, silane, and when used, the acrylic or methacrylic acid or functionalized derivative thereof, a free radical curing catalyst, and any other optional ingredients at ambient temperatures.

Fibers may be used in the instant composition as reinforcing fibers. These reinforcing agents have a melting point or a glass transition temperature above about 130°C. These fibers include fiberglass, carbon fibers, aromatic polyamide fibers (such as aramid fibers sold by E. I. du Pont de Nemours & Company, Wilmington, Delaware, under the trademark of Kevlar), metal fibers, such as aluminum and steel fibers, boron fibers, and the like.

The carbon fibers include those having a high Young's modulus of elasticity and high tensile strength. These carbon fibers may be produced from pitch, as described in U.S. Patents 3,976,729; 4,005,183 and 4,026,788, for example.

The preferred fibers are fiberglass, carbon fibers, aromatic polyamide fibers, and mixtures thereof.

The fibers which are suitable for use in this invention, preferably, have a length of at least 1/4 inch, and an average length of at least 1/2 inch. Fibers with different lengths exceeding 1/4 inch may be used, provided that at least about 50 percent of the fibers have lengths greater than 1/2 inch. Preferred fiber length are from 1 to 2 or more inches. Continuous filaments may also be used.

It is also within the scope of this invention to include the use of fiber reinforcements of shorter lengths and also fillers such as milled glass and inorganic fillers.

The molded article contains from about 10 to about 75, preferably from about 40 to about 70 weight percent of the reinforcement fiber or from about 20 to about 40 weight percent of milled glass reinforcement.

It is, furthermore, desirable to utilize a vinyl polymerization inhibitor in those cases where the resin solution is to be stored and/or shipped. Suitable vinyl polymerization inhibitors are hydroquinone, para-benzoquinone, t-butyl catechol, quinhydrone, toluhydroquinone, mon-t-butylhydroquinone, 2,5 - di - t - t - butylhydroquinone, hydroquinone monomethyl ether, the biphenol derivatives described in U.S.P. 4,158,027, and the like. The amount of inhibitor for the purpose of preventing vinyl polymerization can be that conventionally used, namely from about 100 to about 1000 ppm of the combined weight of components (a), (b) and (c).

The composition of this invention may also include other ingredients, such as mold release agents, and the like.

A procedure for producing a molded article from the composition of this invention is described in U.S. Patent Application Serial No. 135,906 entitled "Molding Process and Apparatus Therefore", and filed on April 14, 1980 in the name of R. Angell, Jr., which is incorporated herein by reference. In this application, a process for rapidly fabricating fiber reinforced thermoset resin articles is described. The fiber reinforcement is comprised of one or more fibers with a melting point or a glass transition temperature above about 130°C. The process comprises the steps of (a) providing one or more fibers with a melting point or a glass transition temperature above about 130°C in the form of an interlocked mass in a heatable matched metal die mold, (b) providing in one or more accumulator zones, a liquid body of a thermosettable organic material having a viscosity determined at 120°C, in the absence of curing agent therefore, of less than about 50 centipoise, and which is curable upon heating to a thermoset resin composition, the viscosity of said liquid body being maintained essentially constant in the accumulator zone by keeping its temperature below that at which curing of said material is substantial, (c) closing the mold containing the web, (d) injecting at least a portion of said thermosettable organic material under pressure from said accumulator zone(s) into the mold to thereby fill the cavity in said mold, (e) initiating the curing of said material in said mold by subjecting the material to a temperature above the temperature at which the curing of said material is initiated, by heating the mold, and (f) opening said mold and removing the cured thermoset article therefrom.

In said U.S. Patent Application Serial No. 135,906 the apparatus comprises: (a) a heatable matched die mold containing one or more cavities therein with means for opening said mold to expose such cavities, and closing the same, and means for controlling the injection of a thermosettable organic liquid to such cavities when the mold is closed (b) means associated with said mold, whereby one or more fibers in the form of an interlocked mass are provided in a portion of the cavities thereof when the mold is open to expose such cavities and prior to the injection of the thermosettable organic liquid to such cavities when the mold is closed, (c) accumulator means associated with said mold which can contain a thermosettable liquid transportable to means for controlling injection of said liquid to such cavities, (d) cooling means associated with the means for controlling the injection of such liquid to such cavities, whereby the temperature of the liquid in such injection means is maintained substantially below the temperature of the mold.

Examples

The following examples serve to illustrate specific embodiments of this invention and it is not intended that the invention shall be limited by the examples.

In the examples, the tensile and flexural properties of the prepared composites were determined according to the procedures described in ASTMD-638 and ASTMD-790, respectively. In each example, from five to twenty-five separate tensile bars or flexural bars were prepared from a series of molded plaques. The glass content of each specimen was determined via ashing. The glass content ranged from approximately 50 to 70 weight percent. Linear regression was used to determine the best fit line to a composite property versus weight percent glass plot. The property values reported in Tables I—IV represent the regression value at a sixty weight percent glass fiber reinforcement level.

Control A

Glass fiber reinforcement was prepared by chopping OCF-447 BA 162 glass tow (Owens-Corning Fibeglas, Inc. Toledo, Ohio) to a one-inch length and depositing in a random-in-the-plane configuration on a flat surface. The chopped fibers were bound into a mat configuration via a water borne latex binder 60 percent solids. Binder weight (solids) was approximately 2-1/2 percent of the chopped fiberglass. The

resulting mats were allowed to thoroughly dry and were then cut into 8×8 inch sheets. The thickness and density of the glass mat was variable.

A weighed amount of glass mat (approximately 100 to 170 grams) was placed in the cavity of an 8×8 inch three-piece positive pressure compression mold. Subsequently, a weighed amount of resin (approximately 90 to 110 grams) was distributed over the glass mat. The resin mixture consisted of 50 weight percent of ethoxylated bisphenol A dimethacrylate, 50 weight percent of styrene, 0.5 phr of Zelec UN mold release (an organophosphate mold release sold by E. I. du Pont de Nemours, Wilmington, Delaware), and 1.5 phr of t butyl per benzoate. The top half of the mold was seated and the entire mold was placed in a preheated compression molding press. Hydraulic force was gradually applied to the mold until a level of approximately 28 tons was reached.

This hydraulic force was maintained for a 10 minute heating cycle during which time the mold temperature (as monitored by a thermocouple centered in the bottom mold half) reach approximately 130 to 140°C in four to five minutes and remained nearly constant for about ten minutes at which time the cooling cycle was initiated. The mold was removed from the press when the temperature fell below approximately 80°C. The resulting cured glass reinforced composite plaque was subsequently demolded. Tensile and flexural specimens were prepared and tested. The glass content of each test specimen was determined via ashing. The composite property profile versus glass content was determined and normalized via linear regression to sixty weight percent glass.

The results are shown in Table I.

Example 1

The procedure of Control A was repeated except that the resin contained the following ingredients:

50 wt. % ethoxylated bisphenol A dimethacrylate,
50 wt. % styrene,
1 phr gamma-Methacryloxypropyl-trimethoxysilane (A-174, supplied by Union Carbide Corp., Danbury, Conn.),
1.5 phr t-butyl perbenzoate, and
0.5 phr Zelec UN Mold release

The results are shown in Table I.

Example 2

The procedure of Control A was repeated except that the resin contained the following ingredients:

50 wt. % ethoxylated bisphenol A dimethacrylate,
50 wt. % styrene,
1 phr tris(methyl cellosolve)-gammamethacryl propyl silane (A-175, supplied by Union Carbide Corp, Danbury, Conn.),
1.5 phr t butyl perbenzoate, and
0.5 phr Zelec UN Mold release

The results are shown in Table I.

Example 3

The procedure of Control A was repeated except that the resin contained the following ingredients:

50 wt. % ethoxylated bisphenol A dimethacrylate,
50 wt. % styrene,
1 phr gamma-aminopropyltriethoxysilane,
1.5 phr t butyl perbenzoate, and
0.5 phr Zelec UN Mold release

The results are shown in Table I.

TABLE I

| Example | Resin | | Glass | Tensile | | | Flexural | |
|---|---|---|---|---|---|---|---|---|
| | Ingredients[1] | Wt. % | Wt. % | Strength (psi×$10^3$) | Modulus (psi×$10^6$) | Elongation (%) | Strength (psi×$10^3$) | Modulus (psi×$10^6$) |
| Control A | EBAM<br>Styrene | 50<br>50 | 60 | 24.7 | 1.66 | 1.80 | 40.0 | 1.70 |
| 1 | EBAM<br>Styrene<br>A-174 | 50<br>50<br>1 phr | 60 | 29.5 | 1.77 | 2.18 | 47.2 | 1.83 |
| 2 | EBAM<br>Styrene<br>A-175 | 50<br>50<br>1 phr | 60 | 27.2 | 1.68 | 2.02 | 46.9 | 1.95 |
| 3 | EBAM<br>Styrene<br>A-1100 | 50<br>50<br>1 phr | 60 | 28.7 | 1.79 | 1.93 | 43.0 | 1.76 |

[1] EBAM=ethoxylated bisphenol A dimethacrylate
A-174=gamma-Methacryloxypropyltrimethoxysilane
A-175=tris(methylcellosolve)gamma-Methacrylpropylsilane
A-1100=gamma-aminopropyltriethoxy silane

Control B

The procedure of Control A was repeated except that the OCF-447 glass based reinforcement mat was no longer composed of random-in-the-plane fibers. The chopper was modified so that the resulting glass fiber mat deposition was characterized by a clearly defined directionality i.e., a portion of the fibers were aligned in a uni-directional pattern with the balance of the fibers in a random configuration. The directionality of the fiber reinforcement necessitated that tensile and flexural test samples be tested in two directions i.e., with the aligned fibers parallel to the long specimen axis (longitudinal orientation) and with the aligned fiber perpendicular to the long specimen axis (transverse orientation).

Control B composite properties were determined for the longitudinal orientation.

Results are shown in Table II.

Control C

The procedure of Control B was repeated except that the resin contained the following ingredients:
50 wt. % ethoxylated bisphenol A dimethacrylate,
39 wt. % styrene,
11 wt. % 2-hydroxyethyl acrylate,
1.5 phr t-butyl perbenzoate, and
0.5 phr Zelec UN mold release
The results are shown in Table II.

Example 4

The procedure of Control B was repeated except that the resin contained the following ingredients:
50 wt. % ethoxylated bisphenol A dimethacrylate,
39 wt. % styrene,
11 wt. % 2-hydroxyethyl acrylate
1 phr gamma-methacryloxy propyltrimethoxysilane,
1.5 phr of t-butyl perbenzoate, and
0.5 phr Zelec UN mold release
The results are shown in Table II.

Control D

The procedure of Control B was repeated except that the resin contained the following ingredients:
40 wt. % ethoxylated bisphenol A dimethacrylate,
50 wt. % styrene,
10 wt. % 2-hydroxyethyl acrylate,
1.5 phr of t-butyl perbenzoate, and
0.5 phr Zelec UN Mold release
The results are shown in Table II.

Example 5

The procedure of Control B was repeated except that the resin contained the following ingredients:
40 wt. % ethoxylated bisphenol A dimethacrylate,
50 wt. % styrene,
10 wt. % 2-hydroxyethylacrylate,
1 phr gamma-methacryloxy propyltrimethoxysilane,
1.5 phr of t-butyl perbenzoate, and
0.5 phr Zelec UN mold release
The results are shown in Table II.

Control E

The procedure of Control B was repeated except that the resin contained the following ingredients:
50 wt. % ethoxylated bisphenol A dimethacrylate,
47 wt. % styrene,
3 wt. % acrylic acid, and
1.5 phr of t-butyl perbenzoate, and
0.5 phr Zelec UN mold release
The results are shown in Table II.

Example 6

The procedure of Control B was repeated except that the resin contained the following ingredients:
50 wt. % ethoxylated bisphenol A dimethacrylate,
47 wt. % styrene,
3 wt. % acrylic acid,
1 phr gamma-amino propyltriethoxy silane,
1.5 phr of t-butyl perbenzoate, and

0.5 phr Zelec UN mold release,
The results are shown in Table II.

Example 7

The procedure of Control B was repeated except that the resin contained the following ingredients:
50 wt. % ethoxylated bisphenol A dimethacrylate,
44 wt. % styrene,
6 wt. % acrylic acid,
1 phr gamma-amino propyltriethoxy silane,
1.5 phr of t-butyl perbenzoate, and
0.5 phr Zelec UN mold release
The results are shown in Table II.

Example 8

The procedure of Control B was repeated except that the resin contained the following ingredients:
50 wt. % ethoxylated bisphenol A dimethacrylate,
50 wt. % styrene,
1 phr gamma-mercaptopropyltrimethoxy silane,
1.5 phr of t-butyl perbenzoate, and
0.5 phr Zelec UN mold release
The results are shown in Table II.

Example 9

The procedure of Control B was repeated except that the resin contained the following ingredients:
50 wt. % ethoxylated bisphenol A dimethacrylate,
50 wt. % styrene,
1 phr beta-(3,4-Epoxycyclohexyl) ethyl trimethoxysilane,
1.5 phr of t-butyl perbenzoate, and
0.5 phr Zelec UN mold release
The results are shown in Table II.

TABLE II

| Example | Resin | | Glass | Tensile | | | Flexural | |
|---|---|---|---|---|---|---|---|---|
| | Ingredients[1] | Wt. % | Wt. % | Strength (psi×$10^3$) | Modulus (psi×$10^6$) | Elongation (%) | Strength (psi×$10^3$) | Modulus (psi×$10^6$) |
| Control B | EBAM<br>Styrene | 50<br>50 | 60 | 37.3 | 2.01 | 1.80 | 44.6 | 2.28 |
| Control C | EBAM<br>Styrene<br>HEA | 50<br>39<br>11 | 60 | 37.7 | 2.20 | 2.02 | 66.7 | 2.27 |
| 4 | EBAM<br>Styrene<br>HEA<br>A-174 | 50<br>39<br>11<br>1 phr | 60 | | 2.28 | 2.06 | 59.6 | 2.22 |
| Control D | EBAM<br>Styrene<br>HEA | 40<br>50<br>10 | 60 | 37.3 | 2.32 | 1.78 | 55.8 | 2.09 |
| 5 | EBAM<br>Styrene<br>HEA<br>A-174 | 40<br>50<br>10<br>1 phr | 60 | 39.9 | 2.43 | 1.87 | 60.9 | 2.30 |

TABLE II (cont.).

| Example | Resin | | Glass | Tensile | | | Flexural | |
|---|---|---|---|---|---|---|---|---|
| | Ingredients[1] | Wt. % | Wt. % | Strength (psi×$10^3$) | Modulus (psi×$10^6$) | Elongation (%) | Strength (psi×$10^3$) | Modulus (psi×$10^6$) |
| Control E | EBAM<br>Styrene<br>AA | 50<br>47<br>11 | 60 | — | — | — | 59.4 | 2.29 |
| 6 | EBAM<br>Styrene<br>AA<br>A-1100 | 50<br>47<br>3<br>1 phr | 60 | 43.0 | 2.60 | 1.86 | 74.1 | 2.48 |
| 7 | EBAM<br>Styrene<br>AA<br>A-1100 | 50<br>44<br>6<br>1 phr | 60 | 51.4 | 2.66 | 2.16 | 68.7 | 2.33 |
| 8 | EBAM<br>Styrene<br>A-189 | 50<br>50<br>1 phr | 60 | 32.6 | 2.01 | 1.83 | 46.0 | 2.20 |
| 9 | EBAM<br>Styrene<br>A-186 | 50<br>50<br>1 phr | 60 | 36.0 | 2.20 | 1.90 | 47.0 | 2.54 |

[1] EBAM=ethoxylated bisphenol A dimethacrylate
HEA=2-hydroxyethyl acrylate
A-174=gamma-Methacryloxypropyltrimethoxysilane
A-1100=gamma-Amino propyltrimethoxysilane
AA=Acrylic Acid
A-189=gamma-Mercaptopropyltrimethoxysilane
A-186=beta-(3,4-Epoxycyclohexyl)ethyltrimethoxysilane

Control F

The procedure of Control B was repeated except that composite properties were determined for the transverse orientation.

Results are shown in Table III.

Control G

The procedure of Control F was repeated except that the resin contained the following ingredients:
50 wt. % ethoxylated bisphenol A dimethacrylate,
39 wt. % styrene,
11 wt. % 2 hydroxyethylacrylate,
1.5 phr t-butyl perbenzoate, and
0.5 phr Zelec UN mold release
The results are shown in Table III.

Control H

The procedure of Control F was repeated except that the resin contained the following ingredients:
40 wt. % ethoxylated bisphenol A dimethacrylate,
50 wt. % styrene,
10 wt. % 2 hydroxyethylacrylate,
1.5 phr t-butyl perbenzoate, and
0.5 phr Zelec UN mold release
The results are shown in Table III.

Control I

The procedure of Control F was repeated except that the resin contained the following ingredients:
50 wt. % ethoxylated bisphenol A dimethacrylate,
47 wt. % styrene,
3 wt. % acrylic acid, and
1.5 phr Zelec UN mold release
The results are shown in Table III.

Example 10

The procedure of Control F was repeated except that the resin contained the following ingredients:
50 wt. % ethoxylated bisphenol A dimethacrylate,
47 wt. % styrene,
3 wt. % acrylic acid,
1.0 phr gamma-aminopropyltriethoxy silane,
1.5 phr t-butyl perbenzoate, and
0.5 phr Zelec UN mold release
The results are shown in Table III.

Example 11

The procedure of Control F was repeated except that the resin contained the following ingredients:
50 wt. % ethoxylated bisphenol A dimethacrylate,
44 wt. % styrene,
6 wt. % acrylic acid,
1.0 phr gamma-aminopropyltriethoxy silane 1.5 phr t-butyl perbenzoate, and
0.5 phr Zelec UN mold release
The results are shown in Table III.

Example 12

The procedure of Control F was repeated except that the resin contained the following ingredients:
50 wt. % ethoxylated bisphenol A dimethacrylate,
50 wt. % styrene,
1.0 phr gamma-mercaptopropyltrimethoxy-silane,
1.5 phr t-butyl perbenzoate, and
0.5 phr Zelec UN mold release
The results are shown in Table III.

Example 13

The procedure of Control F was repeated except that the resin contained the following ingredients:
50 wt. % ethoxylated bisphenol A dimethacrylate,
50 wt. % styrene,
1.0 phr beta-(3,4-Epoxycyclohexyl)ethyltrimethoxysilane,
1.5 phr t-butyl perbenzoate, and

0.5 phr Zelec UN mold release
The results are shown in Table III.

Example 14

The procedure of Control F was repeated except that the resin contained the following ingredients:
50 wt. % ethoxylated bisphenol A dimethacrylate,
50 wt. % styrene,
1.0 phr phenyltrimethoxysilane,
1.5 phr t-butyl perbenzoate, and
0.5 phr Zelec UN mold release
The results are shown in Table III.

Example 15

The procedure of Control F was repeated except that the resin contained the following ingredients:
50 wt. % ethoxylated bisphenol A dimethacrylate,
50 wt. % styrene,
2.0 phr phenyltrimethoxysilane,
1.5 phr t-butyl perbenzoate, and
0.5 phr Zelec UN mold release
The results are shown in Table III.

Example 16

The procedure of Control F was repeated except that the resin contained the following ingredients:
50 wt. % ethoxylated bisphenol A dimethacrylate,
50 wt. % styrene,
1.0 phr carbowax silane,
1.5 phr t-butyl perbenzoate, and
0.5 phr Zelec UN mold release
The results are shown in Table III.

TABLE III

| Example | Resin | | Glass | Tensile | | | Flexural | |
|---|---|---|---|---|---|---|---|---|
| | Ingredients[1] | Wt. % | Wt. % | Strength (psi×$10^3$) | Modulus (psi×$10^6$) | Elongation (%) | Strength (psi×$10^3$) | Modulus (psi×$10^6$) |
| Control F | EBAM | 50 | 60 | 16.7 | 1.07 | 1.95 | 26.4 | 1.31 |
| | Styrene | 50 | | | | | | |
| Control G | EBAM | 50 | 60 | 26.0 | 1.52 | 1.70 | 32.0 | 1.38 |
| | Styrene | 39 | | | | | | |
| | HEA | 11 | | | | | | |
| Control H | EBAM | 40 | 60 | 17.8 | 1.13 | 2.11 | 32.0 | 1.28 |
| | Styrene | 50 | | | | | | |
| | HEA | 10 | | | | | | |
| Control I | EBAM | 50 | 60 | 22.1 | 1.43 | 2.08 | 36.6 | 1.51 |
| | Styrene | 47 | | | | | | |
| | AA | 3 | | | | | | |
| 10 | EBAM | 50 | 60 | — | — | — | 35.0 | 1.42 |
| | Styrene | 47 | | | | | | |
| | AA | 3 | | | | | | |
| | A-1100 | 1 phr | | | | | | |
| 11 | EBAM | 50 | 60 | 20.9 | 1.35 | 2.00 | 36.7 | 1.63 |
| | Styrene | 44 | | | | | | |
| | AA | 6 | | | | | | |
| | A-1100 | 1 phr | | | | | | |
| 12 | EBAM | 50 | 60 | 17.4 | 1.01 | 2.16 | 27.6 | 1.30 |
| | Styrene | 50 | | | | | | |
| | A-189 | 1 phr | | | | | | |
| 13 | EBAM | 50 | 60 | 16.6 | 1.00 | 2.18 | 26.6 | 1.32 |
| | Styrene | 50 | | | | | | |
| | A-186 | 1 phr | | | | | | |

TABLE III (contd.)

Properties of the composite

| Example | Resin | | Glass | Tensile | | | Flexural | |
|---|---|---|---|---|---|---|---|---|
| | Ingredients[1] | Wt. % | Wt. % | Strength (psi×$10^3$) | Modulus (psi×$10^6$) | Elongation (%) | Strength (psi×$10^3$) | Modulus (psi×$10^6$) |
| 14 | EBAM<br>Styrene<br>PTM | 50<br>50<br>1 phr | 60 | 16.1 | 1.08 | 2.04 | 29.3 | 1.4 |
| 15 | EBAM<br>Styrene<br>PTM | 50<br>50<br>2 phr | 60 | 15.2 | 0.98 | 1.97 | 24.1 | 1.2 |
| 16 | EBAM<br>Styrene<br>Y-5889 | 50<br>50<br>1 phr | 60 | 14.4 | 0.96 | 1.83 | 27.9 | 1.3 |

[1] EBAM=ethoxylated bisphenol A dimethacrylate
HEA=2 hydroxyethyl acrylate
AA=acrylic acid
A-1100=gamma-amino propyltriethoxysilane
A-189=gamma-mercapto propyltrimethoxysilane
A-186=beta(3,4-Epoxycyclohexyl)ethyl trimesilane
PTM=phenyltrimethoxysilane
Y-5889=carbowax silane

Control J

A weighed amount (from approximately 74 to 109 grams) of Type AKM glass mat (PPG Industries, Inc. Pittsburgh, PA.) was placed in a 10×5-1/2×1/10 inch constant volume mold preheated to 140°C. The mold was closed, evacuated for about 5 seconds, and a resin portion containing 50 weight percent ethoxylated bisphenol A dimethacrylate, 50 weight percent styrene, 0.5 phr Zelec UN mold release and 1.5 phr of 1,1 - di - t - butylperoxy - 3,3,5 - tri - methylcyclohexane (Trigonox 29-B-75 sold by Noury Chemical Corp., Burt, NY) was injected at a pressure of 300 psi into the mold in approximately 4—9 seconds. The pressure was maintained for a dwell period of 10 seconds. The resin was allowed to cure for an additional 60 seconds, upon which the cured glass reinforced composite was demolded. Flexural specimens were prepared and testing procedures and data analysis were conducted as indicated in Control A.

The results are shown in Table IV.

Example 17

The procedure of Control J was repeated except that the resin contained the following ingredients:

50 wt. % ethoxylated bisphenol A dimethacrylate,
40 wt. % styrene,
10 wt. % 2 hydroxyethyl acrylate,
1.0 phr gamma-methacryloxypropyltrimethoxysilane
1.5 phr Trigonox 29-B-75, and
0.5 phr Zelec UN mold release

The results are shown in Table IV.

Example 18

The procedure of Control J was repeated except that the resin contained the following ingredients:

50 wt. % ethoxylated bisphenol A dimethacrylate,
40 wt. % styrene,
10 wt. % 2 hydroxyethylacrylate,
1.0 phr gamma-amino propyltriethoxysilane
1.5 phr Trigonox 29-B-75, and
0.5 phr Zelec UN mold release

The results are shown in Table IV.

TABLE IV

| | Resin | | Glass | Properties of the composite — Flexural | |
|---|---|---|---|---|---|
| Example | Ingredients[1] | Wt. % | Wt. % | Strength (psi×$10^3$) | Modulus (psi×$10^6$) |
| Control J | EBAM | 50 | 60 | 28.0 | 1.40 |
| | Styrene | 50 | | | |
| 17 | EBAM | 50 | 60 | 29.4 | 1.73 |
| | Styrene | 40 | | | |
| | HEA | 10 | | | |
| | A-174 | 1 phr | | | |
| 18 | EBAM | 50 | 60 | 32.9 | 1.67 |
| | Styrene | 40 | | | |
| | HEA | 10 | | | |
| | A-1100 | 1 phr | | | |

[1] EBAM=ethoxylated bisphenol A dimethacrylate
HEA=2 hydroxyethyl acrylate
A-1100=gamma-amino propyltriethoxysilane
A-174=gamma-methacryloxy propyltrimethoxysilane

Control K

The procedure of Control J was repeated except that the constant volume mold was 10×5 1/2×3/16 inch in dimension. The weighed amount of Type AKM glass mat charged to the mold cavity was from approximately 140 to 200 grams.

The results are shown in Table V.

Example 19

The procedure of Control K was repeated except that the resin contained the following ingredients:
50 wt. % ethoxylated bisphenol A dimethacrylate,
40 wt. % styrene,
10 wt. % 2 hydroxyethyl acrylate,
1.0 phr gamma-methacryloxy propyltrimethoxysilane,
1.5 phr Trigonox 29-B-75, and
0.5 phr Zelec UN mold release
The results are shown in Table V.

Example 20

The procedure of Control K was repeated except that the resin contained the following ingredients:
50 wt. % ethoxylated bisphenol A dimethacrylate,
40 wt. % styrene,
10 wt. % 2 hydroxyethylacrylate,
1.0 phr gamma-aminopropyltriethoxysilane,
1.5 phr Trigonex 29-B-75, and
0.5 phr Zelec UN mold release
The results are shown in Table V.

TABLE V

| Example | Resin | | Glass | Properties of the composite: Flexural | |
|---|---|---|---|---|---|
| | Ingredients[1] | Wt. % | Wt. % | Strength (psi×$10^3$) | Modulus (psi×$10^6$) |
| Control J | EBAM<br>Styrene | 50<br>50 | 60 | 23.0 | 1.44 |
| 17 | EBAM<br>Styrene<br>HEA<br>A-174 | 50<br>40<br>10<br>1 phr | 60 | 32.6 | 1.74 |
| 18 | EBAM<br>Styrene<br>HEA<br>A-1100 | 50<br>40<br>10<br>1 phr | 60 | 34.8 | 1.59 |

[1] EBAM=ethoxylated bisphenol A dimethacrylate
HEA=2 hydroxyethyl acrylate
A-1100=gamma-aminopropyltriethoxysilane
A-174=gamma-methacryloxypropyltrimethoxysilane

**Claims**

1. A curable molding composition comprising a mixture of:
(a) A poly(acrylate) characterized by the following empirical formula:

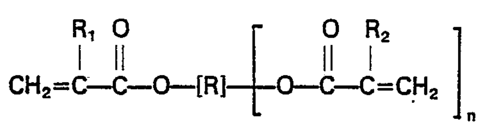

(I)

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3,

(b) an ethylenically unsaturated monomer which is soluble in and copolymerizable with (a) and which is different from (a), and

(c) a silane and/or siloxane.

2. A curable composition as defined in claim 1, wherein the poly(acrylate) is selected from one or more of the following: ethoxylated bisphenol A dimethacrylate, ethoxylated bisphenol A diacrylate, tetraethylene glycol dimethacrylate, diethylene glycol dimethacrylate, tetraethylene glycol diacrylate diethylene glycol diacrylate, trimethylolpropane triacrylate, and trimethylolpropane trimethacrylate.

3. A curable composition as defined in claims 1 or 2, wherein the ethylenically unsaturated monomer comprises styrene.

4. A curable composition as defined in any of claims 1—3, wherein the silane is of the general formula:

$$R_3R_4SiY_2$$

wherein $R_3$ is a monovalent aliphatically unsaturated hydrocarbon or hydrocarbonoxy radical, Y is a hydrolyzable group and $R_4$ is $R_3$ or Y.

5. A curable composition as defined in claim 4, wherein $R_3$ is selected from vinyl, allyl, butenyl, cyclohexenyl, cyclopentadienyl, cyclohexadienyl,

$CH_2{=}C(CH_3)COO(CH_2)_3—$, and

$CH_2{=}C(CH_3)COOCH_2CH_2O(CH_2)_3—$,

and Y is selected from an alkoxy radical, an acyloxy radical, oximo radical or a substituted amino radical.

6. A curable composition as defined in any of claims 1—5 wherein the silanes are of the following formulae:

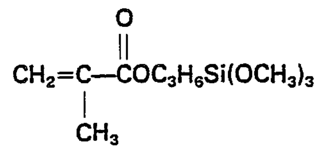

$NH_2(CH_2)_3Si(OCH_2H_5)_3$

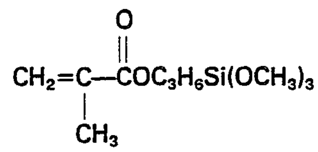

$CH_2{=}CHSi(OCH_2CH_3)_3$

$CH_2{=}CHSi(OC_2H_4OCH_3)_3$ or

$CH_3O—[—C_2H_4O—]_{7.5}—C_3H_6Si(OCH_3)_3$

7. A curable composition as defined in any of claims 1—5 wherein the siloxane is of the following formula:

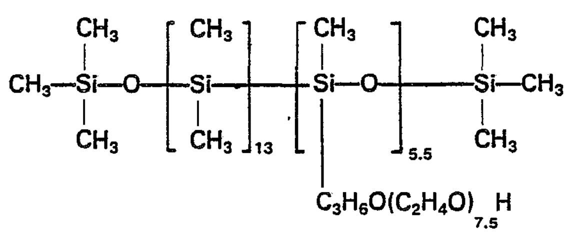

8. A curable composition as defined in any of claims 1—7 which contains acrylic or methacrylic acid or a functionalized derivative thereof which is different from (a) and (b).

9. A curable composition as defined in claim 8, wherein the functionalized derivative of acrylic or methacrylic acid is characterized by the following formula:

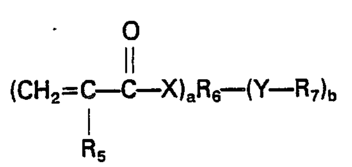 (II)

wherein $R_5$ is independently hydrogen or methyl; X and Y are independently —O— or

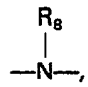

wherein $R_8$ is hydrogen or lower alkyl; $R_6$ is an aliphatic or aromatic radical containing from 2 to about 10 carbon atoms, optionally containing —O— or

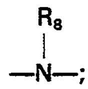

$R_7$ is hydrogen or an aliphatic or aromatic radical containing from 1 to 10 carbon atoms; and a and b are integers of or greater than 1.

10. A curable composition as defined in claim 9 wherein the functionalized derivative is selected from one or more of the following: 2-hydroxyethyl acrylate, 2-hydroxyethyl methacrylate, hydroxypropyl acrylate, hydroxypropyl methacrylate, hydroxybutyl acrylate, hydroxybutyl methacrylate, 2-aminoethyl acrylate, 2-methylaminoethyl acrylate, 2-methylaminoethyl methacrylate, 2-dimethylaminoethyl acrylate, 2-dimethylaminoethyl methacrylate, 2-hydroxyethyl acrylamide, 2-hydroxyethyl methacrylamide, 2-aminoethyl acrylamide, 2-aminoethyl acrylamide, 2-aminoethyl methacrylamide, diethylene glycol monoacrylate, diethylene glycol monomethacrylate, 2-methoxyethyl acrylate, 2-methoxyethyl methacrylate, pentaerythritol monoacrylate, pentaerythritol monomethacrylate, pentaerythritol diacrylate, pentaerythritol triacrylate, glycerol monoacrylate, glycerol monomethacrylate, trimethylolpropane monoacrylate, trimethylolpropane monomethacrylate, glycidyl acrylate, glycidyl methacrylate, and hydroxymethyl acrylamide.

11. A curable composition as defined in any of claims 1—10, which contains a curing initiator, preferably (1) a perester and/or perketal, or a mixture of peresters and/or perketals, or (2) an azo and/or peroxide containing compound or (3) an azo compound and a perester and/or perketal.

12. A curable composition as defined in any of claims 1—11 which contains an acidic cure accelerator and/or an accelerator comprising a cobalt containing compound.

13. A molded article prepared from the composition of any of claims 1—12.

14. A molded article as defined in claim 13 which contains from about 10 to about 75 weight percent of one or more fibers having a melting point or a glass transition temperature above about 130°C, such as fiberglass, carbon fibers, aromatic polyamide fibers, and mixtures thereof.

**Patentansprüche**

1. Härtbare Formmasse, umfassend ein Gemisch aus:

(a) einem Poly(acrylat), gekennzeichnet durch die folgende empirische Formel:

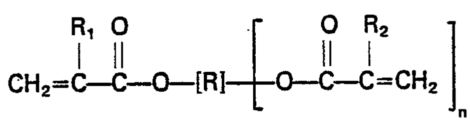

(I)

worin R der hydroxylfreie Rest eines organischen mehrwertigen Alkohols ist, der alkoholische Hydroxylgruppen an verschiedene Kohlenstoffatome gebunden enthielt, $R_1$ und $R_2$ unabhängig Wasserstoff oder Methyl sind und n 1 bis 3 ist,

(b) ein ethylenisch ungesättigtes Monomer, das in (a) löslich und damit copolymerisierbar ist und von (a) unterschiedlich ist, und

(c) ein Silan und/oder Siloxan.

2. Härtbare Masse nach Anspruch 1, worin das Poly(acrylat) ausgewählt ist unter einem oder mehreren der folgenden: ethoxyliertes Bisphenol A-dimethacrylat, ethoxyliertes Bisphenol A-diacrylat, Tetraethylenglykoldimethacrylat, Diethylenglykoldimethacrylat, Tetraethylenglykoldiacrylat, Diethylenglykoldiacrylat, Trimethylolpropantriacrylat und Trimethylolpropantrimethacrylat.

3. Härtbare Masse nach Anspruch 1 oder 2, worin das ethylenisch ungesättigte Monomer Styrol umfaßt.

4. Härtbare Masse nach irgendeinem der Ansprüche 1 bis 3, worin das Silan die allgemeine Formel hat:

$$R_3R_4SiY_2$$

worin $R_3$ ein einwertiger aliphatisch ungesättigter Kohlenwasserstoff- oder Kohlenwasserstoffoxyrest ist, Y eine hydrolysierbare Gruppe ist und $R_4$ $R_3$ oder Y ist.

5. Härtbare Masse nach Anspruch 4, worin $R_3$ ausgewählt ist unter Vinyl, Allyl, Butenyl, Cyclohexenyl, Cyclopentadienyl, Cyclohexadienyl,

$CH_2{=}C(CH_3)COO(CH_2)_3$— und

$CH_2{=}C(CH_3)COOCH_2CH_2O(CH_2)_3$—

und Y ausgewählt ist unter einem Alkoxyrest, einem Acyloxyrest, Oximrest oder einem substituierten Aminorest.

6. Härtbare Masse nach irgendeinem der Ansprüche 1 bis 5, worin die Silane die folgenden Formeln haben:

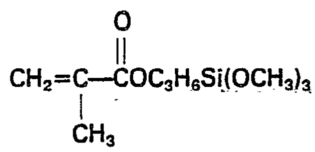

$NH_2(CH_2)_3Si(OCH_2H_5)_3$

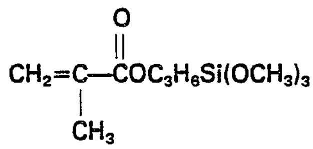

$CH_2{=}CHSi(OCH_2CH_3)_3$

$CH_2{=}CHSi(OC_2H_4OCH_3)_3$ oder

$CH_3O—[—C_2H_4O—]_{7.5}—C_3H_6Si(OCH_3)_3$

7. Härtbare Masse nach irgendeinem der Ansprüche 1 bis 5, worin das Siloxan die folgende Formel hat:

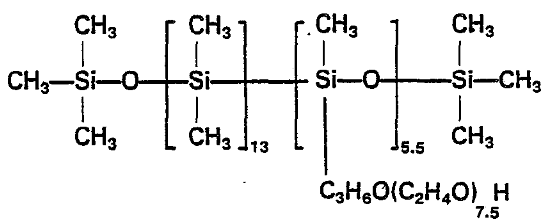

8. Härtbare Masse nach irgendeinem der Ansprüche 1 bis 7, die Acryl- oder Methacrylsäure oder ein funktionalisiertes Derivat davon, das von (a) und (b) verschieden ist, enthält.

9. Härtbare Masse nach Anspruch 8, worin das funktionalisierte Derivat von Acryl- oder Methacrylsäure gekennzeichnet ist durch die folgende Formel:

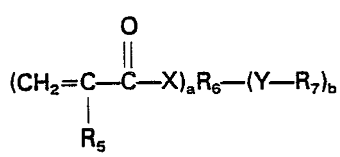 (II)

worin $R_5$ unabhängig Wasserstoff oder Methyl ist; X und Y unabhängig —O— oder

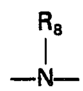

sind, worin $R_8$ Wasserstoff oder Nieder-alkyl ist; $R_6$ ein aliphatischer oder aromatischer Rest mit 2 bis etwa 10 Kohlenstoffatomen ist, der gegebenenfalls —O— oder

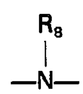

enthält; $R_7$ Wasserstoff oder ein aliphatischer oder aromatischer Rest mit 1 bis 10 Kohlenstoffatomen ist; und a und b ganze Zahlen von oder größer als 1 sind.

10. Härtbare Masse nach Anspruch 9, worin das funktionalisierte Derivat ausgewählt ist unter einem oder mehreren der folgenden: 2-Hydroxyethylacrylat, 2-Hydroxyethylmethacrylat, Hydroxypropylacrylat, Hydroxypropylmethacrylat, Hydroxybutylacrylat, Hydroxybutylmethacrylat, 2-Aminoethylacrylat, 2-Methylaminoethylacrylat, 2-Methylaminoethylmethacrylat, 2-Dimethylaminoethylacrylat, 2-Dimethylaminoethylmethacrylat, 2-Hydroxyethylacrylamid, 2-Hydroxyethylmethacrylamid, 2-Aminoethylacrylamid, 2-Aminoethylacrylamid, 2-Aminoethylmethacrylamid, Diethylenglykolmonoacrylat, Diethylenglykolmonomethacrylat, 2-Methoxyethylacrylat, 2-Methoxyethylmethacrylat, Pentaerythritmonoacrylat, Pentaerythritmonomethacrylat, Pentaerythritdiacrylat, Pentaerythrittriacrylat, Glycerinmonoacrylat, Glycerinmonomethacrylat, Trimethylolpropanmonoacrylat, Trimethylolpropanmonomethacrylat, Glycidylacrylat, Glycidylmethacrylat und Hydroxymethylacrylamid.

11. Härtbare Masse nach irgendeinem der Ansprüche 1 bis 10, die einen Härtungsinitiator, vorzugsweise (1) einen Perester und/oder ein Perketal oder ein Gemisch von Perestern und/oder Perketalen oder (2) eine Azo- und/oder Peroxid-haltige Verbindung oder (3) eine Azoverbindung und einen Perester und/oder ein Perketal, enthält.

12. Härtbare Masse nach irgendeinem der Ansprüche 1 bis 11, die einen sauren Härtungsbeschleuniger und/oder einen Beschleuniger, der eine kobalthaltige Verbindung umfaßt, enthält.

13. Formkörper, hergestellt aus der Masse nach irgendeinem der Ansprüche 1 bis 12.

14. Formkörper nach Anspruch 13, der etwa 10 bis etwa 75 Gew.-% einer oder mehrerer Fasern mit einem Schmelzpunkt oder einer Glasübergangstemperatur über etwa 130°C enthält, z.B. Glasfasern, Kohlefasern, aromatische Polyamidfasern und Mischungen davon.

**Revendications**

1. Composition moulable réticulable comprenant un mélange:

(a) d'un poly(acrylate) caractérisé par la formule développée suivante:

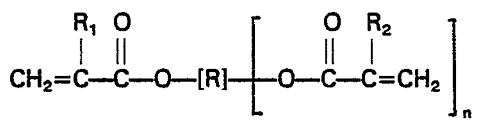

(I)

dans laquelle R est le résidu dépourvu d'un radical hydroxy d'un alcool polyhydroxylique organique qui contenait des groupes hydroxyle alcooliques liés à des atomes de carbone différents, $R_1$ et $R_2$ représentent indépendamment l'hydrogène ou le groupe méthyle et n a une valeur de 1 à 3, (b) d'un monomère à insaturation éthylénique qui est soluble dans, et copolymérisable avec, (a) et qui est différent de (a) et

(c) d'un silane et/ou siloxane.

2. Composition réticulable suivant la revendication 1, dans laquelle le poly(acrylate) est un ou plusieurs des composés suivants: diméthacrylate de bisphénol A éthoxylé, diacrylate de bisphénol A éthoxylé, diméthacrylate de tétraéthylèneglycol, diméthacrylate de diéthylèneglycol, diacrylate de tétraéthylèneglycol, diacrylate de diéthylèneglycol, triacrylate de triméthylolpropane et triméthacrylate de triméthylolpropane.

3. Composition réticulable suivant la revendication 1 ou 2, dans laquelle le monomère à insaturation éthylénique comprend du styrène.

4. Composition réticulable suivant l'une quelconque des revendications 1 à 3, dans laquelle le silane répond à la formule générale

$$R_3R_4SiY_2$$

dans laquelle $R_3$ est est un radical monovalent d'hydrocarbure à insaturation aliphatique ou radical hydrocarbyloxy, Y est un groupe hydrolysable et $R_4$ représente $R_3$ ou Y.

5. Composition réticulable suivant la revendication 4, dans laquelle $R_3$ est choisi entre des radicaux vinyle, allyle, butényle, cyclohexényle, cyclopentadiényle, cyclohexadiényle,

$$CH_2{=}C(CH_3)COO(CH_2)_3\text{—}$$

et

$$CH_2{=}C(CH_3)COOCH_2CH_2O(CH_2)_3\text{—}$$

et Y est choisi entre un radical alkoxy, un radical acyloxy, un radical oximo ou un radical amino substitué.

6. Composition réticulable telle que définie dans l'une quelconque des revendications 1 à 5, dans laquelle les silanes répondent aux formules suivantes:

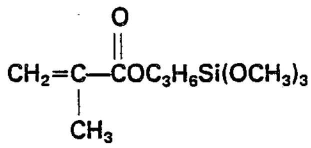

$NH_2(CH_2)_3Si(OCH_2H_5)_3$

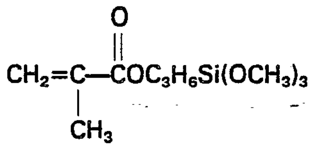

$CH_2{=}CHSi(OCH_2CH_3)_3$

$CH_2{=}CHSi(OC_2H_4OCH_3)_3$ ou

$CH_3O{-}[{-}C_2H_4O{-}]_{7,5}{-}C_3H_6Si(OCH_3)_3$

7. Composition réticulable telle que définie dans l'une quelconque des revendications 1 à 5, dans laquelle le siloxane répond à la formule suivante:

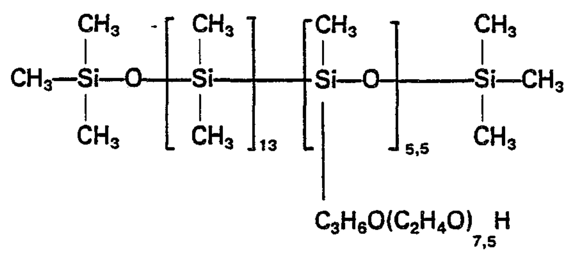

8. Composition réticulable telle que définie dans l'une quelconque des revendications 1 à 7, qui contient de l'acide acrylique ou méthacrylique ou un dérivé fonctionnalisé de cet acide qui est différent de (a) et (b).

9. Composition réticulable telle que définie dans la revendication 8, dans laquelle le dérivé fonctionnalisé d'acide acrylique ou méthacrylique est caractérisé en ce qu'il répond à la formule suivante:

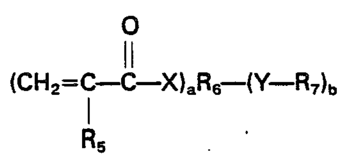

(II)

dans laquelle $R_5$ représente indépendamment l'hydrogène ou le groupe méthyle; X et Y représentent indépendamment —O— ou

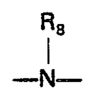

où $R_8$ est l'hydrogène ou un groupe alkyle inférieur; $R_6$ est un radical aliphatique ou aromatique contenant 2 à environ 10 atomes de carbone, renfermant éventuellement —O— ou

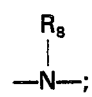

$R_7$ est l'hydrogène ou un radical aliphatique ou aromatique contenant 1 à 10 atomes de carbone; et a et b sont des nombres entiers égaux ou supérieurs à 1.

10. Composition réticulable telle que définie dans la revendication 9, dans laquelle le dérivé fonctionnalisé consiste en un ou plusieurs composés choisis entre: l'acrylate de 2-hydroxyéthyle, le

méthacrylate de 2-hydroxyéthyle, l'acrylate d'hydroxypropyle, le méthacrylate d'hydroxypropyle, l'acrylate d'hydroxybutyle, le méthacrylate d'hydroxybutyle, l'acrylate de 2-aminoéthyle, l'acrylate de 2-méthylaminoéthyle, le méthacrylate de 2-méthylaminoéthyle, l'acrylate de 2-diméthylaminoéthyle, le méthacrylate de 2-diméthylaminoéthyle, le 2-hydroxyéthylacrylamide, le 2-hydroxyéthylacrylamide, le 2-aminoéthylméthacrylamide, le 2-aminoéthylacrylamide, le 2-aminoéthylméthacrylamide, le monoacrylate de diéthylèneglycol, le monométhacrylate de diéthylèneglycol, l'acrylate de 2-méthoxyéthyle, le méthacrylate de 2-méthoxyéthyle, le monoacrylate de pentaérythritol, le monométhacrylate de pentaérythritol, la diacrylate de pentaérythritol, le triacrylate de pentaérythritol, le monoacrylate de glycérol, le monométhacrylate de glycérol, le monoacrylate de triméthylolpropane, le monométhacrylate de triméthylolpropane, l'acrylate de glycidyle, le méthacrylate de glycidyle, et l'hydroxyméthylacrylamide.

11. Composition réticulable telle que définie dans l'une quelconque des revendications 1 à 10, qui contient un initiateur de réticulation, de préférence (1) un perester et/ou un percétal ou un mélange de peresters et/ou de percétals, ou (2) un composé azoïque et/ou un composé contenant un peroxyde ou (3) un composé azoïque et un perester et/ou un percétal.

12. Composition réticulable telle que définie dans l'une quelconque des revendications 1 à 11, qui contient un accélérateur acide de réticulation et/ou un accélérateur comprenant un composé qui contient du cobalt.

13. Article moulé réalisé à partir de la composition suivant l'une quelconque des revendications 1 à 12.

14. Article moulé tel que défini dans la revendication 13, qui contient environ 10 à environ 75% en poids d'une ou plusieurs fibres ayant un point de fusion ou une température de transition vitreuse de plus d'environ 130°C, comme de la fibre de verre, des fibres de carbone, des fibres de polyamides aromatiques et leurs mélanges.